# EUROPÄISCHE PATENTSCHRIFT

(11) **EP 1 561 363 B1**
(45) Veröffentlichungstag und Bekanntmachung des Hinweises auf die Patenterteilung: **15.06.2011**
(21) Anmeldenummer: 03775347.2
(22) Anmeldetag: 12.11.2003
(51) Int. Cl.: H04R 3/00, G10L 15/28

(54) **SPRACHEINGABE-INTERFACE**
VOICE INPUT INTERFACE
INTERFACE D'ENTREE VOCALE

(30) Priorität: 12.11.2002 DE 10252457
(43) Veröffentlichungstag der Anmeldung: 10.08.2005
(73) Patentinhaber: Harman Becker Automotive Systems GmbH, 76307 Karlsbad (DE)
(72) Erfinder: BIRK, Christian, 89079 Ulm (DE); HAULICK, Tim, 89143 Blaubeuren (DE); LINHARD, Klaus, 89601 Schelklingen (DE)
(74) Vertreter: Grünecker, Kinkeldey, Stockmair & Schwanhäusser Anwaltssozietät
(86) Internationale Anmeldenummer: PCT/EP2003/012660
(87) Internationale Veröffentlichungsnummer: WO 2004/044889

(56) Entgegenhaltungen:
- EP-A- 0 867 860
- EP-A- 1 085 781
- WO-A-01/29823
- WO-A-01/39177
- DE-A- 19 925 064

## Beschreibung

Die Erfindung betrifft Systeme, bei denen das Sprechen eines Anwenders aufgenommen und als Signal weitergeleitet wird. Insbesondere betrifft die Erfindung Systeme, bei denen über eine Spracheingabe Funktionen ausgelöst oder gesteuert werden.

Systeme mit Spracheingabe und Sprachsteuerung sind bekannt. So sind beispielsweise bei Computern Eingaben - Diktieren von Texten oder Steuerbefehle - per Sprache möglich. In der Medizintechnik existieren Geräte, die zur Entlastung bei schwierigen Eingriffen durch Sprachkommandos des Arztes gesteuert werden können. Auch im Sicherheitsbereich werden Vorrichtungen eingesetzt, die beispielsweise eine verschlossene Tür selektiv nur auf Spracheingaben autorisierter Personen öffnen.

Die WO 01/39177 A2 offenbart ein Verfahren zur Spracherkennung, in dem ein Sprachsignal in einem ersten Schritt auf einem mobilen Computer vorläufig erkannt wird, und das vorläufige Erkennerergebnis danach zur vollständigen Erkennung an eine weitere Computereinrichtung übermittelt wird.

Die EP 0 867 860 A2 offenbart ein Sprachbediensystem mit mehreren Mikrofonen und Lautsprechern, in dem Übertragungspfade zwischen den Mikrofonen und den Lautsprechern modelliert werden.

In der EP 1 085 781 A1 wird ein Verfahren zur Adaption der Richtcharakteristiken von Mikrofonen zur Verbesserung der Zuverlässigkeit einer Sprachsteuerung beschrieben.

Alle derartigen System erfordern für das Erkennen der sprachlichen Information bzw. Kommandos eine hohe akustische Qualität der Spracheingabe. Besonders störend wirkt sich beispielsweise ein zu großer Abstand zwischen Mikrofon und Mund des Sprechers aus (zu geringe Eingabelautstärke). In gleicher Weise wirkt ein Sprechen in eine Richtung, die nicht im Hauptaufnahmebereich des Mikrofons liegt. Auch eine relativ nahe Distanz zum Mikrofon kann sich negativ auswirken, da in diesem Fall zum einen leicht eine Übersteuerung des Aufnahmepegels auftreten kann, zum anderen durch den Atmen des Sprechers zusätzlich starke akustische Störgeräusche (Windgeräusche) entstehen können. Grundsätzlich wirkt sich auch ein ho-her Geräuschpegel aus der Umgebung sehr störend auf die Erkennungsgenauigkeit des Spracheingabesystems aus.

Um diese bekannten Probleme zu lösen, werden beispielsweise für Computersysteme mit Texteingabe Mikrofonbügel eingesetzt, die (zumeist in Verbindung mit einem Kopfhörer oder Ohrhörer) vom Anwender am Kopf getragen werden. Bei entsprechender Ausrichtung des Bügels befindet sich das Aufnahmemikrofon auch bei Kopfbewegungen stets in gleichem Abstand nahe am Mund des Sprechers. Nachteilig ist dabei die eingeschränkte Bewegungsfreiheit aufgrund der üblichen Kabelverbindung zum Computer. Auch können Störgeräusche durch Bewegungen des Kabels auftreten. Zudem empfinden viele Personen das Tragen von Kopf- oder Ohrhörern, insbesondere bei längerer Anwendung, als unangenehm.

Alternativ werden daher auch Mikrofone mit stationärer Position, z.B. Tischmikrofon mit Stativ oder integriert in das Gehäuse (PC, Laptop) oder befestigt am Gerät (Türrahmen bei Sicherungsfunktion) verwendet. Nachteilig ist dabei die auf einen bestimmten Raumbereich vor dem Mikrofon beschränkte Aufnahmezone. Dies erfordert vom Anwender die Einhaltung einer definierte Position, Körperhaltung, Sprechrichtung usw., d.h. es besteht praktisch keine Bewegungsfreiheit während der Spracheingabe.

Ausgehend von diesem Stand der Technik liegt der vorliegenden Erfindung die Aufgabe zugrunde, ein verbessertes System zur Spracheingabe zu entwickeln, das die genannten Nachteile weitgehend überwindet und zusätzliche Vorteile aufweist.

Diese Aufgabe wird bei einer Vorrichtung mit den Merkmalen des Oberbegriffs des Anspruchs 1 gelöst durch die kennzeichnenden Merkmale des Anspruchs 1. Weitere Einzelheiten der Erfindung und Vorzüge verschiedener Ausführungsformen sind Gegenstand der Merkmale der Unteransprüche.

Die erfindungsgemäße Vorrichtung wird im folgenden anhand einer bevorzugten Ausführungsform beschrieben, wobei Bezug genommen wird auf die Abbildungen und den darin aufgeführten Bezugsziffern.

Dabei zeigen:
- Fig. 1: das erfindungsgemäße Spracheingabesystem aus Zentraleinheit und separaten Sprachinterface
- Fig. 2: eine schematische Darstellung einer Ausführungsform des Sprachinterfaces
- Fig. 3: Richtcharakteristik des vom Anwender mitgeführten Sprachinterfaces

Die vorliegende Erfindung zielt darauf ab, Komfort und Qualität bei Spracheingabesystemen deutlich zu verbessern. Dabei soll ein mit Mikrofonen ausgestattetes transportables Sprachinterface vom Anwender ständig getragen werden, wodurch ihm letztlich ein universeller Sprachzugang zu verschiedenen Systemen ermöglicht wird. Durch Verwendung von Mikrofonarrays kann auch bei verschiedenen akustischen Umgebungen eine hohe Eingabequalität gegenüber Störgeräuschen erreicht werden. Damit ist es auch als Spracheingabesystem in Fahrzeugen geeignet, da Störungen durch Fahrgeräusche oder Echoeffekte bei Lautsprecherausgaben vom Mikrofonarray vermindert werden. Für ein ständig zu tragenden Sprachinterfaces ist es wichtig, dass es klein und leicht ist und - je nach äußerer Gestaltung - beispielsweise als Schmuck oder Identifikationssymbol akzeptiert wird.

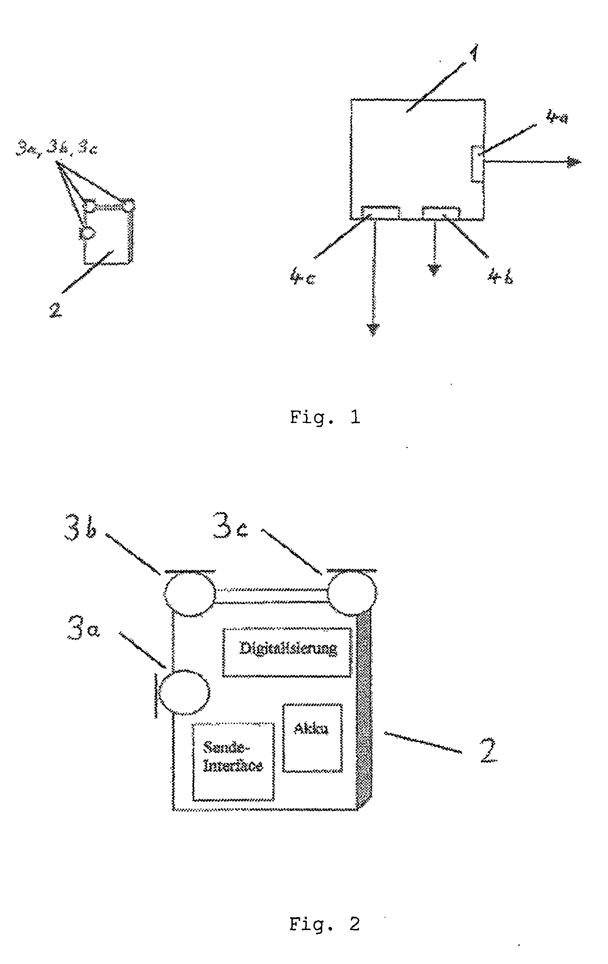

Fig. 1 zeigt als Übersicht die zusammenwirkenden Komponenten des Spracheingabesystems. Das Sprachinterface (2) ist als mobile Einheit ausgeführt und wird vom Anwender, z.B. an der Kleidung, getragen. Es überträgt die akustisch aufgenommenen Sprachsignale drahtlos, z.B. per Infrarot- oder Funkverbindung an die Zentraleinheit (1), in der die Signale weiter aufbereitet werden und diverse Steuerfunktionen ausgelöst werden.

Zur Gewährleistung einer hohen Qualität der Sprachaufnahme weist das Sprachinterface (2) zwei oder mehrere Mikrofone (3a, 3b, 3c) auf. Eine solche Anordnung ist in Fig. 2 vergrößert dargestellt.

Die verwendeten Mikrofone (3a, 3b, 3c) können individuelle Richtcharakteristiken (Niere, Hyperniere, Acht) aufweisen. Damit wird bereits durch eine vordefinierte Mikrofon-Richtcharakteristik Schall vorrangig aus einer bestimmten Zone verstärkt aufgenommen.

Die hier erfindungsgemäß vorgeschlagene Verwendung eines kleinen Mikrofonsystems mit zwei oder mehr Mikrofonen erlaubt die Bildung von Mikrofonarrays. Durch das Zusammenwirken der Mikrofone in einem solchen Mikrofonarray kann - in Verbindung mit einer für solche Arrays üblichen elektronischen Aufbereitung - die Qualität der Spracheingabe wesentlich verbessert werden: So kann - über die oben erwähnte, unveränderliche Mikrofon-Richtcharakteristik hinaus - eine spezielle räumliche Richtwirkung des Mikrofonarrays eingestellt werden, d.h. akustische Signale werden vorrangig aus einem gewünschten Raumbereich (Mundpartie des Anwenders) aufgenommen. Durch diese zusätzliche Array-Richtcharakteristik werden Nebengeräusche aus anderen Bereichen der Umgebung weiter unterdrückt bzw. können elektronisch weitgehend herausgefiltert werden.

Die Array-Richtcharakteristik ergibt sich aus der Anzahl und geometrischer Anordnung der Mikrofone. Im einfachsten Fall werden zwei Mikrofone verwendet (Minimalkonfiguration). Vorzugsweise ist das Interface jedoch mit drei (wie in Fig. 2 dargestellt) oder mehr Mikrofonen ausgestattet, die eine bessere Richtwirkung und Störschallunterdrückung ermöglichen. Es gibt zwei grundsätzliche Mikrofon-Array-Anordnungen: 'broad-side' und 'end-fire'. Bei 'broad-side' liegt die Richtwirkung senkrecht auf der gedachten Verbindungslinie der Mikrofone, bei 'end-fire' liegt die Richtwirkung in Richtung der gedachten Verbindungslinie der Mikrofone. Das Ausgangssignal eines 'broad-side' Arrays ergibt sich in einfachster Form aus der Summation der einzelnen Signale, beim 'end-fire' Array aus der Differenz, wobei auch Laufzeitkorrekturen eingesetzt werden.

Die Richtwirkung des Mikrofonarrays kann durch weitere Maßnahmen verändert und damit eine adaptive Richtcharakteristik erreicht werden. Dabei werden die einzelnen Mikrofonsignale nicht einfach addiert oder subtrahiert, sondern durch spezielle Signalverarbeitungsalgorithmen so ausgewertet, dass akustische Signale aus einer Hauptrichtung verstärkt empfangen werden und Nebengeräusche aus anderen Richtungen abgeschwächt aufgenommen werden. Die Lage der Hauptrichtung ist dabei veränderbar, d.h. sie kann adaptiv an ein sich änderndes akustisches Szenario angepaßt werden. Dabei kann beispielsweise die Art und Weise, wie das Signal der Hauptrichtung bewertet und maximiert wird und gleichzeitig Störgeräusche aus Nebenrichtungen minimiert werden, in einem Fehlerkriterium festgelegt sein. Algorithmen zur Erzeugung einer adaptiven Richtwirkung sind unter dem Begriff 'Beamforming' bekannt. Verbreitete Algorithmen sind z.B. der Jim-Griffith Beamformer oder der 'Frost' Beamformer.

Durch Veränderung entsprechender Parameter kann die Hauptrichtung beim 'Beamforming' so variiert werden, dass sie mit der Richtung aus der gesprochen wird übereinstimmt, was einer aktiven Sprecherortung entspricht. Eine einfache Möglichkeit die Sprechrichtung zu bestimmen ist z.B. die Laufzeitschätzung zwischen zwei Empfangssignalen zweier Mikrofone. Wird die Kreuzkorrelation zwischen den beiden Werten errechnet, so ergibt sich der maximale Kreuzkorrelations-Wert bei der Laufzeitverschiebung beider Signale. Wird nun die diese Laufzeit zur Verzögerung des einen Signals eingesetzt, so sind die beiden Signale wieder gleichphasig. Damit ist die Hauptrichtung in die aktuelle Sprechrichtung eingestellt. Wird die Laufzeitschätzung und Korrektur wiederholt durchgeführt, so wird einer Relativbewegung des Sprechers adaptiv gefolgt. Dabei ist es vorteilhaft für die Sprecherortung nur einen zuvor festgelegten Raumsektor zuzulassen. Dazu ist es erforderlich, die Mikrofonanordnung grob in einer gewissen Richtung zum Mund des Sprechers anzubringen, z.B. am Kleidungsstück des Sprechers.

Der Mund des Anwenders kann sich dann innerhalb des festgelegten Raumsektors gegenüber der Position des Sprachinterfaces (2) frei bewegen, die Sprecherortung wird ihm folgen. Wird eine Signalquelle außerhalb des festgelegten Raumsektors detektiert, dann wird diese als Störung identifiziert (beispielsweise eine Lautsprecherausgabe). Der Beamforming-Algorithmus kann sich nun speziell auf den Schall aus dieser Richtung im Sinne eine Minimierung des Störsignals einstellen. Dies läßt auch eine wirksame Echokompensation zu.

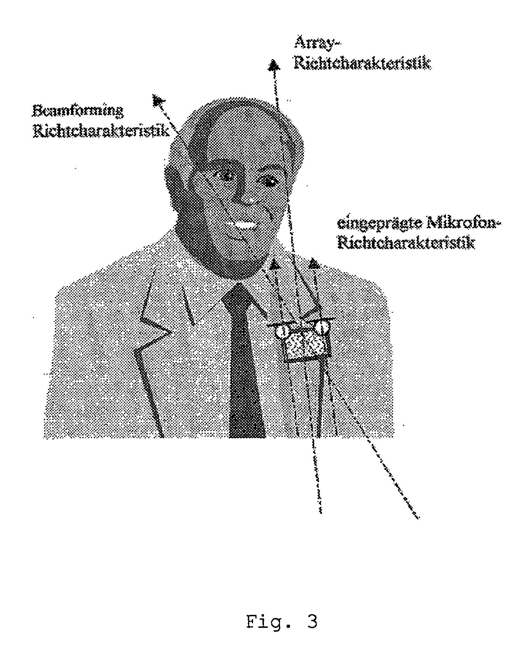

Fig. 3 zeigt beispielhaft ein kleines Mikrofonsystem aus zwei einzelnen Mikrofonen mit einer eingeprägten Richtcharakteristik die rechts am Mund des Sprechers vorbei gerichtet ist. Die Mikrofone sind hier an der oberen Kante eines kleinen Gehäuses angebracht. Der Array-Typ ist 'broad-side', d.h. die Richtwirkung des Arrays ist senkrecht zur Kante des Gehäuses nach oben gerichtet. Die adaptive Richtwirkung über Beamforming-Algorithmen sorgt dafür, dass die wirksame Richtcharakteristik auf die Quelle, den Mund des Anwenders ausgerichtet ist.

Mikrofone mit hoher Qualität sind als Miniaturausführung (bis herab zu Millimetergröße) verfügbar. Ebenso sind drahtlose Übertragungseinrichtungen, z.B. Infrarot- oder Funksender, mit heutiger Technik (z.B. als SMD oder IC) extrem klein herstellbar. Zur Stromversorgung genügt eine kleine Batterie bzw. Akkumulator (z.B. Knopfzelle), da nur ein geringer Energieverbrauch entsteht. Damit ist die Integration aller Komponenten des Sprachinterfaces (2) zu einer kleinen und auch aufgrund des sehr geringen Gewichts bequem tragbaren Einheit möglich. Beispielsweise kann ein solches miniaturisiertes Sprachinterface (2) als Ansteckvorrichtung bzw. Clip an der Kleidung befestigt werden (vergleichbar mit einer Brosche) oder an einem Armband oder einer Halskette mitgeführt werden.

In einer ersten Ausführungsform werden die jeweiligen Signale der einzelnen Mikrofone des Arrays parallel zur Zentraleinheit übermittelt. Dort werden dann diese Signale elektronisch weiter verarbeitet, um Richtungscharakteristik und Störgeräuschunterdrückung einzustellen. Diese Funktionen können alternativ - zumindest teilweise - auch bereits im Sprachinterface selbst erfolgen. In dem Sprachinterface (2) sind dann entsprechende elektronische Schaltkreise integriert, die für eine erste Signalaufbereitung sorgen. So kann beispielsweise auch der jeweilige Mikrofon-Aufnahmepegel durch automatische Verstärkungsregelungen (Automatic-Gain-Control) angepaßt werden oder durch entsprechende Filter bestimmte Frequenzanteile abgeschwächt oder verstärkt werden.

Wie in Figur 2 dargestellt kann das Eingabeinterface (2) auch Komponenten für eine Umwandlung analoger in digitale Signale aufweisen. Die Übertragung digitaler Signale zur Zentraleinheit (1) bietet mit den heute verfügbaren Sende/Empfangstechniken einen sehr hohen Informationsfluss bei minimaler Störanfälligkeit.

Das Sprachinterface (2) kann mit einer Aktivierungstaste oder Sensorfläche ausgestattet werden, deren Betätigung/Berührung eine Spracherkennung aktiviert, beispielsweise durch Übertragung eines entsprechenden Signals an die Zentraleinheit (1). Alternativ kann eine solche Aktivierung auch durch Spracheingabe eines Schlüsselwortes erfolgen.

In einer erweiterten Ausführungsform weist das Sprachinterface (2) zusätzlich eine Empfangseinrichtung auf (nicht dargestellt), die drahtlos übermittelte Steuersignale von der Zentraleinheit (1) empfangen kann. Damit kann die Charakteristik der Sprachaufnahme (Kombination der Mikrofone zum Array, Verstärkung, Frequenzfilter usw.) im Sprachinterface (2) durch die Zentraleinheit (1) verändert werden. Weiterhin kann die Zentraleinheit (1) über die Empfangseinrichtung dem Benutzer auch ein akustisches oder optisches Signal übermitteln, beispielsweise als 'Feedback' für erfolgreich ausgelöste Aktionen aber auch Fehlfunktionen (Kommando nicht erkannt oder - z.B. wegen Störung der Schnittstellen - nicht ausführbare Funktion) oder zur Anforderung weiterer Eingaben (Kommando unvollständig). Als Signalgeber können z.B. verschiedenfarbige LED's oder piezokeramische Kleinlautsprecher in das Spracheingabeinterface (2) integriert werden. Auch ist es denkbar, eine Eingabeeinheit, beispielsweise Tastatur, zur Eingabe von Informationen in Textform vorzusehen.

Die Zentraleinheit (1) empfängt die drahtlos übermittelten Signale des Sprachinterfaces (2) und wertet sie für eine Spracherkennung aus. Auch die verschiedenen erforderlichen Kalkulationen zur Sprecherortung und adaptiven Anpassung der Richtungscharakteristik des Mikrofonarrays können ganz oder teilweise in der Zentraleinheit (1) erfolgen. Die für eine zuverlässige und schnelle Signalverarbeitung und Spracherkennung erforderliche Prozessorleistung kann beispielsweise über ein übliches Computer- bzw. Mikroprozessorsystem zur Verfügung gestellt werden, das vorzugsweise Teil der Zentraleinheit (1) ist. Damit können anwenderspezifische Konfigurationen (Arraycharakteristik, Spracheigenheiten, spezielle Schalt/Steuerkommandos usw.) jederzeit neu einprogrammiert werden.

Da die Zentraleinheit (1) getrennt vom Sprachinterface (2) - z.B. integriert in Geräte (TV, Telefonanlage, PC-System usw.) - stationär ausgebildet ist, entstehen auch bei leistungsfähiger elektronischer und EDV-technischer Ausstattung keine besonderen Probleme oder Einschränkungen bzgl. Stromversorgung, Volumen, Gewicht oder auch Kühlung wärmeproduzierender Komponenten (Prozessor).

Die Zentraleinheit (1) ist so konfiguriert, dass erkannte Kommandos über integrierte Schnittstellen (4a, 4b, 4c) entsprechende Schalt- und Steuerfunktionen auslösen, auf die verschiedene externe Geräte reagieren.

Hierzu können beispielsweise Telefonsysteme, Audio- und Videogeräte gehören, aber auch eine Vielzahl elektrisch/elektronisch steuerbarer Hausgeräte (Licht, Heizung, Klimaanlage, Jalousien, Türöffner u.v.a.m). Bei Einsatz in einem Fahrzeug können entsprechend Funktionen des Fahrzeugs (Navigationssystem, Musikanlage, Klima, Scheinwerfer, Scheibenwischer usw.) gesteuert werden.

Die Übertragung der Steuersignale der Schnittstellen (4a, 4b, 4c) zu den verschiedenen externen Geräten kann ihrerseits wieder drahtlos (IR, Funk) oder auch (z.B. bei Einsatz im Fahrzeug) mittels Kabelverbindung erfolgen.

Die erfindungsgemäße Spracheingabevorrichtung bietet dem Anwender völlige Bewegungsfreiheit (auch über größere Distanz z.B. verschiedene Räume/Etagen eines Hauses). Hinzu kommt ein optimaler Tragekomfort, da das Sprachinterface (2) nicht am Kopf befestigt werden muß. Durch das kleine Eigengewicht und die geringe Größe (insbesondere als Miniaturausführung) entsteht durch das Sprachinterface keinerlei Behinderung, so dass es - vergleichbar zu einer Armbanduhr - für ein dauerhaftes Tragen geeignet ist.

Verschiedene Geräte bzw. Funktionen an unterschiedlichen Orten können mit ein und demselben Sprachinterface gesteuert werden (Multimediaeinrichtungen, Hausgeräte, Fahrzeugfunktionen, Büro-PC, Sicherheitsanwendungen, usw.), da auch mehrere Zentraleinheiten an unterschiedlichen Standorten (z.B. Privaträume, Fahrzeug, Arbeitsbereich) so eingestellt werden können, dass sie auf das gleiche Sprachinterface bzw. den gleichen Anwender reagieren.

Besonders vorteilhaft ist die hohe Flexibilität des vorgestellten Spracheingabesystems. So ermöglicht das Mikrofonarray eine aktive - je nach Ausführung auch automatische - Justierung auf veränderte Gegebenheiten, wie z.B. andere Raumakustik oder Befestigung des Sprachinterfaces an anderer Stelle der Kleidung (andere Sprechrichtung) oder auch ein neuer Anwender (eigene Sprechweise). Durch Programmierung der Zentraleinheit kann das Spracheingabesystem flexibel an die jeweiligen Steuer und Regelungsaufgaben angepaßt werden. Grundsätzlich bietet das erfindungsgemäße System den Vorteil, dass das sehr kleine und leichte Sprachinterface vom Anwender ständig getragen werden kann. Ein Benutzer kann es ohne Behinderung auch bei sich führen, wenn er seinen Aufenthaltsort ändert, z.B. in sein Auto einsteigt. Durch das Mikrofonarray und damit verbundenen Richtungswirkung der Schallaufnahme ergibt sich auch bei ungünstigen Umständen (Umgebungsgeräusche) eine hohe akustische Sprachaufnahmequalität. Die aufwändigen Prozesse der Sprachaufbereitung können über entsprechend leistungsfähige Komponenten in der Zentraleinheit mit sehr hoher Erkennungssicherheit erfolgen. Dabei kann die Spracherkennung individuell auf einen oder mehrere Anwender justiert werden, z.B. für eine Funktionsbeschränkung nur auf vorbestimmte, autorisierte Person(en). Die Ansteuerung verschiedener Geräte über entsprechende Schnittstellen ist frei konfigurierbar und kann nach individuellen Wünschen für verschiedenste Anwendungszwecke modifiziert und erweitert werden.

## Patentansprüche

1. Spracheingabesystem aus stationärer Zentraleinheit (1) und transportablem Sprachinterface (2), wobei
die Zentraleinheit (1) Mittel zum Empfang drahtlos übermittelter Sprachsignale und Mittel für eine Auswertung dieser Sprachsignale zur Erkennung gesprochener Worte aufweist, sowie Schnittstellen (4a, 4b, 4c), die in Abhängigkeit von erkannten Worten Schalt- oder Regelsignale erzeugen und an externe Geräte übertragen; und wobei
das Sprachinterface (2) zwei oder mehr Mikrofone (3a, 3b, 3c) aufweist, die als Mikrofonarray kombiniert sind, sowie Mittel zur drahtlosen Übertragung der vom Mikrofonarray generierten Signale an die Zentraleinheit (1), wobei
das Mikrofonarray eine Richtcharakteristik in der Weise aufweist, dass Schall vorrangig aus einer Richtung aufgenommen wird; und
**dadurch gekennzeichnet, dass**
die stationäre Zentraleinheit (1) und/oder das transportable Sprachinterface (2) dazu ausgebildet sind, die Richtcharakteristik durch Aufbereitung der von den Mikrofonen (3a, 3b, 3c) des Mikrofonarrays erzeugten Signale über Beamforming-Algorithmen, insbesondere wie in einem Griffith- oder Frost-Beamformer, derart zu verändern, dass sie einer räumlichen Verlagerung der Schallquelle in Form einer Sprechernachführung folgt.

2. Spracheingabesystem nach Anspruch 1, in dem das Sprachinterface (2) Mittel zur elektronischen Aufbereitung der von den Mikrofonen (3a, 3b, 3c) des Mikrofonarrays erzeugten Signale aufweist.

3. Spracheingabesystem nach Anspruch 2, in dem die elektronische Aufbereitung eine Veränderung der jeweiligen Signalpegel (Verstärkung, Dämpfung, AGC) und/ oder Frequenzanteile (Höhen-, Tiefen-, Band-Filter) und/ oder der jeweiligen Signalphasen bewirkt.

4. Spracheingabesystem nach einem der Ansprüche 2 oder 3, in dem die Mittel zur elektronischen Aufbereitung auch Mittel zur Umwandlung analoger in digitale Signale beinhalten.

5. Spracheingabesystem nach einem der Ansprüche 1 bis 4, in dem das Sprachinterface (2) Mittel zum Empfang drahtlos (z. B. IR, Funk) von der Zentraleinheit (1) übermittelter Signale aufweist.

6. Spracheingabesystem nach Anspruch 2,3 oder 4, in dem das Sprachinterface (2) Mittel zum Empfang drahtlos (z. B. IR, Funk) von der Zentraleinheit (1) übermittelter Steuersignale aufweist, mit denen die Zentraleinheit (1) die Mittel zur elektronischen Aufbereitung des Sprachinterfaces (2) beeinflussen kann.

7. Spracheingabesystem nach einem der Ansprüche 1 bis 6, in dem die Mittel der Zentraleinheit (1) zur Auswertung der Sprachsignale als Prozessorsystem (EDV) ausgeführt sind.

8. Spracheingabesystem nach Anspruch 7, in dem das Prozessorsystem anwenderbezogene Daten (z. B. individuelle Sprachkommandos, Sprachparameter) speichert und zur Auswertung der Sprachsignale und/oder zur Erzeugung individuell zugeordneter Steuersignale einbezieht.

9. Spracheingabesystem nach einem der Ansprüche 1 bis 8 in dem die einzelnen Mikrofone (3a, 3b, 3c) des Arrays eine Richtcharakteristik (z. B. Niere, Acht) aufweisen.

## Claims

1. A voice input system comprising a stationary central unit (1) and a mobile voice interface (2), wherein
the central unit (1) has means for receiving voice signals communicated via a wireless link and means for evaluating these voice signals to recognize spoken words, also interfaces (4a, 4b, 4c) which, depending on recognized words, generate switching or regulation signals which they transmit to external appliances, and wherein
the voice interface (2) has two or more microphones (3a, 3b, 3c), which are combined to form a microphone array, and also means for the wireless transmission of the signals generated by the microphone array to the central unit (1),
wherein the microphone array has a directional characteristic such that sound is preferentially recorded from one direction; and
**characterized in that**
the stationary central unit (1) and/or the transportable voice interface (2) are configured to modify the directional characteristic by processing of the signals generated by the microphones (3a, 3b, 3c) of the microphone array by beamforming algorithms, in particular, by the Griffith or Frost beamformer, in such a manner that it follows a spatial repositioning of the sound source in form of a speaker tracking.

2. A voice input system according to clam 1, wherein
the voice interface (2) has means for electronically processing the signals generated by the microphones (3a, 3b, 3c) of the microphone array.

3. A voice input system according to claim 2, wherein the electronic processing causes a change in the respective signal levels (amplification, attenuation, AGC) and/or frequency components (high-pass, low-pass, band-pass filters) and/or the respective signal phases.

4. A voice input system according to one of the claims 2 or 3, wherein the means for the electronic processing also contain means for converting analog signals to digital signals.

5. A voice input system according to one of the claims 1 to 4, wherein the voice interface (2) has means for receiving signals communicated from the central unit (1) over a wireless link (e.g. IR, radio).

6. A voice input system according to one of the claims 2, 3 or 4, wherein the voice interface (2) has means for receiving control signals communicated from the central unit (1) over a wireless link (e.g. IR, radio) with which the central unit (1) can influence the means for electronically processing the voice interface (2).

7. A voice input system according to one of the claims 1 to 6, wherein the means of the central unit (1) for evaluating the voice signals are implemented as a processor system (EDP).

8. A voice input system according to claim 7, wherein the processor system stores user-specific data (e.g. individual voice commands, voice parameters) and makes use thereof to evaluate the voice signals and/or to generate individually assigned control signals.

9. A voice input system according to one of the claims 1 to 8, wherein the individual microphones (3a, 3b, 3c) of the microphone array have a directional characteristic (e.g., kidney or eight).

## Revendications

1. Système de commande vocale comportant une unité centrale stationnaire (1) et une interface vocale transportable (2), dans lequel
l'unité centrale (1) comprend des moyens de réception sans fil de signaux vocaux transmis et des moyens d'évaluation de ces signaux vocaux pour la reconnaissance de mots prononcés, ainsi que des interfaces (4a, 4b, 4c) qui, en fonction de mots reconnus, produisent des signaux de commutation ou de commande et les transmettent à des appareils externes ; et dans lequel
l'interface vocale (2) comprend deux ou plusieurs microphones (3a, 3b, 3c) combinés sous forme d'un réseau de microphones ainsi que des moyens de transmission sans fil des signaux générés par le réseau de microphones dans l'unité centrale (1), dans lequel
le réseau de microphones présente une caractéristique directionnelle telle que le son est reçu principalement selon une direction : et **caractérisé en ce que**
l'unité centrale stationnaire (1) et/ou l'interface vocale transportable (2) sont agencées pour modifier la caractéristique directionnelle par traitement des signaux produits par les microphones (3a, 3b, 3c) du réseau de microphones via des algorithmes de formation de faisceau, et en particulier des algorithmes de formation de faisceau de Griffith ou de Frost, de manière à obtenir un déplacement spatial de la source sonore sous forme d'un suivi du narrateur.

2. Système de commande vocale selon la revendication 1, dans lequel l'interface vocale (2) comporte des moyens de traitement électronique des signaux produits par les microphones (3a, 3b, 3c) du réseau de microphones.

3. Système de commande vocale selon la revendication 2, dans lequel le traitement électronique effectue une modification des niveaux de signal respectifs (amplification, atténuation, contrôle de gain automatique) et/ou des composantes de fréquence (aigus, basses, filtre passe-bande) et/ou des phases de signal respectives.

4. Système de commande vocale selon l'une des revendications 2 ou 3, dans lequel les moyens de traitement électronique comprennent aussi des moyens de conversion de signaux analogiques en signaux numériques.

5. Système de commande vocale selon l'une des revendications 1 à 4, dans lequel l'interface vocale (2) comprend des moyens de réception sans fil (par exemple par infrarouge ou par ondes radio) de signaux transmis par l'unité centrale (1).

6. Système de commande vocale selon la revendication 2, 3 ou 4, dans lequel l'interface vocale (2) comprend des moyens de réception sans fil (par exemple par infrarouge ou par ondes radio) de signaux de commande transmis par l'unité centrale (1) grâce auxquels l'unité centrale (1) peut commander les moyens de traitement électronique de l'interface vocale (2).

7. Système de commande vocale selon l'une des revendications 1 à 6, dans lequel les moyens de l'unité centrale (1) pour l'évaluation des signaux vocaux sont mis en oeuvre sous forme d'un système à processeur (de traitement électronique de données).

8. Système de commande vocale selon la revendication 7, dans lequel le système à processeur stocke des données d'utilisateur (par exemple des commandes ou des paramètres vocaux personnalisés) et les intègre pour l'évaluation des signaux vocaux et/ou la production de signaux de commande personnalisés.

9. Système de commande vocale selon l'une des revendications 1 à 8, dans lequel les microphones individuels (3a, 3b, 3c) du réseau présentent une caractéristique directionnelle (par exemple réniforme ou en forme de huit).
